# EUROPEAN PATENT APPLICATION

(11) **EP 0 625 534 A1**
(43) Date of publication of application: **23.11.1994**
(21) Application number: 94303384.5
(22) Date of filing: 11.05.1994
(51) Int. Cl.: C08G 77/20, C08G 77/46

(54) **Radiation curable siloxane compositions containing vinyl ether functionality and methods for their preparation**

(30) Priority: 18.05.1993 US 63479
(71) Applicant: DOW CORNING CORPORATION, Midland Michigan 48686-0994 (US)
(72) Inventor: Homan, Gary Rex, Midland, Michigan (US); Glover, Shedric ONeal, Midland, Michigan (US)
(74) Representative: Vandamme, Luc Johan Roger

(57) **Abstract**

The present invention relates to radiation curable silicone vinyl ethers and methods for preparing silicone vinyl ethers. More particularly, the present invention relates to compositions containing vinyl ether functional silicones and to the preparation and use of silicone vinyl ethers which are curable by addition of photocleavable acids and exposure to ultraviolet or electron beam radiation.

## Description

The present invention relates to compositions containing vinyl ether functional silicones and to their preparation and to their use. Silicone vinyl ethers are curable by addition of photocleavable acids and exposure to ultraviolet or electron beam radiation.

Alkenyl ether functional organosilicon compounds have been described in the art. For example, U.S. Patent No. 4,617,238 discloses a photopolymerizable composition wherein only one vinyl ether group for each SiH group can be incorporated into the siloxane molecule at any given time.

Other alkenyloxy functional organosilicon compounds are described in U.S. Patent Nos. 4,707,503; 5,057,549; 5,039,176 and EP Patent No. 0 462 389.

The methods of these documents rely on competition between the vinyl ether group and other alkenyl groups within the same compound and do not result in quantitative conversion of SiH to vinyl ether. In contrast, the method of the present invention achieves quantitative conversion of hydridosilane or siloxanes to vinyl ether, a preferred radiation sensitive group.

The present invention introduces a method for making vinyl ether functional siloxane, the method comprising (I) mixing a silane, a vinyl ether compound and a hydrosilylation catalyst to form a reaction product, (II) adding a polydiorganosiloxane to the reaction product of (I), and (III) adding a condensation catalyst to the mixture of (II). In another embodiment, the present invention comprises a process comprising steps (I) - (III) above, then (IV) adding a photocleavable acid to the mixture of (III), applying the mixture from (IV) to a solid substrate to form a coating and then exposing the coating to actinic radiation or a combination of actinic radiation and heat. The present invention further provides a vinyl ether functional polysiloxane compound and to a curable composition comprising the polysiloxane in combination with a photocleavable acid.

It is another object of the present invention to provide a novel method of preparing UV (ultraviolet) or EB (electron beam) curable organopolysiloxanes suitable for paper release applications.

It is also an object of the present invention to produce silicone vinyl ether copolymers or oligomers which are curable by addition of photocleavable acids and exposure to UV or EB radiation.

It is a further object of this invention to provide UV- curable silicone compositions which may be catalyzed by a variety of curing catalysts at especially rapid cure rates.

Thus, a method of making a vinyl ether functional siloxane comprises (I) mixing (A) a silane having the formula (RO)ₓSiR¹₄₋ₓ, (B) a vinyl ether compound selected from (i) H₂C=CHOR²OCH=CH₂ and (ii) (H₂C=CHOR²)_{y}CR³_{4-y}, and (iii) a mixture thereof, and (C) a hydrosilylation catalyst, wherein R is a monovalent hydrocarbon or halohydrocarbon radical having from 1 to 8 carbon atoms, R¹ is hydrogen atom or R, R² is a divalent hydrocarbon or halohydrocarbon radical having from 1 to 20 carbon atoms, R³ is a monovalent hydrocarbon or halohydrocarbon radical having from 1 to 20 carbon atoms or hydrogen atom, x has a value from 1 to 3, y has a value of 3 or 4 and the silane contains at least one silicon bonded hydrogen atom in a molecule; wherein the molar ratio of vinyloxy containing molecules to silicon bonded hydrogen atoms is greater than 1.0, to form a reaction product; (II) adding a polydiorganosiloxane having the formula HOSiR⁴₂O(R⁴₂SiO)ₙSiR⁴₂OH wherein R⁴ is selected from R and R¹, to the reaction product of (I); and (III) adding a condensation catalyst to the mixture of (II).

Step (I) of the present invention comprises mixing a silane, a vinyl ether compound and a hydrosilylation catalyst. The silane has the formula (RO)ₓSiR¹₄₋ₓ wherein R is a monovalent hydrocarbon or halohydrocarbon radical having from 1 to 8 carbon atoms, R¹ is hydrogen atom or R and x has a value from 1 to 3. It is also required that the silane contain at least one silicon bonded hydrogen atom in its molecule.

Each R denotes a monovalent hydrocarbon radical having from 1 to 8 carbon atoms. Monovalent hydrocarbon radicals include alkyl radicals, such as methyl, ethyl, propyl, butyl, hexyl and octyl; cycloaliphatic radicals, such as cyclohexyl; aryl radicals, such as phenyl, tolyl and xylyl; aralkyl radicals, such as benzyl and phenylethyl; and olefinic hydrocarbon radicals, such as vinyl, allyl, methallyl, butenyl and hexenyl, octenyl, cyclohexenyl and styryl. Alkenyl radicals are preferably terminally unsaturated. Highly preferred monovalent hydrocarbon radicals for this silane are methyl, phenyl, vinyl and 5-hexenyl. Monovalent halohydrocarbon radicals free of aliphatic unsaturation include any monovalent hydrocarbon radical noted above which is free of aliphatic unsaturation and has at least one of its hydrogen atoms replaced with a halogen, such as fluorine, chlorine or bromine. Preferred monovalent halohydrocarbon radicals have the formula CₙF₂ₙ₊₁CH₂CH₂- wherein the subscript n has a value of from 1 to 8, such as, CF₃CH₂CH₂- and C₄F₉CH₂CH₂-. The several R radicals can be identical or different. R¹ is a hydrogen atom or R as delineated above.

The amount of silane employed in this invention varies depending on the amount of vinyl ether compound and hydrosilylation catalyst employed. It is preferred that from 2 to 25 weight percent of silane be used, and it is highly preferred that 3 to 15 weight percent be employed, said weight percent being based on the total weight of the composition.

The vinyl ether compound in Step (I) of the present invention is a vinyl ether group having its formula selected from (i) H₂C=CHOR²OCH=CH₂ and (ii) (H₂C=CHOR²)_{y}CR³_{4-y} wherein R² is a divalent hydrocarbon or halohydrocarbon radical having from 1 to 20 carbon atoms, R³ is a monovalent hydrocarbon or halohydrocarbon radical having from 1 to 20 carbon atoms or hydrogen atom and y has a value of 3 or 4. Divalent hydrocarbon radicals suitable as R² are alkylene radicals, such as methylene, ethylene, trimethylene, 2-methyltrimethylene, pentamethylene, hexamethylene, 3-ethylhexamethylene, octamethylene, -CH₂(CH₃)CH-, -(CH2)₄-, -CH₂CH(CH₃)CH₂- and -(CH₂)₁₈-; cycloalkylene radicals such as cyclohexylene; arylene radicals such as phenylene and combinations of divalent hydrocarbon radicals such as benzylene, i.e., -C₆H₄CH₂-.

Examples of suitable divalent halohydrocarbon radicals include any divalent hydrocarbon radical wherein one or more hydrogen atoms have been replaced by halogen, such as fluorine, chlorine or bromine. Preferably divalent halohydrocarbon radicals have the formula -CH₂CH₂CₙF₂ₙCH₂CH₂- wherein n has a value of from 1 to 10 such as, for example, -CH₂CH₂CF₂CF₂CH₂CH₂-. Preferably R² in formula (i) is an alkylene radical having from 6 to 8 carbon atoms, and it is highly preferred that R² in formula (i) is selected from hexylene and cyclohexyldimethylene. Preferably, R² in formula (ii) is methylene.

The monovalent hydrocarbon radicals of R³ in formula (ii) include monovalent hydrocarbon or halohydrocarbon radicals as delineated above for the siloxane, including preferred examples. It is highly preferred in this invention that R³ be methyl. It is also required that the molar ratio of vinyloxy containing molecules to silicon bonded hydrogen atoms be greater than 1.0, and it is highly preferred that this molar ratio be from 3 to 10.

The amount of vinyl ether compound employed in the present invention varies depending on the amount of silane or siloxane and hydrosilylation catalyst employed. It is preferred that from 25 to 98 weight percent of vinyl ether be used, and it is highly preferred that 50 to 95 weight percent be employed, said weight percent being based on the total weight of the composition.

The hydrosilylation catalyst can be any platinum group metal-containing catalyst component which facilitates the reaction of the silicon-bonded hydrogen atoms of the silane with the vinyl ether compound. By platinum group, it is meant herein iron, cobalt, nickel, ruthenium, rhodium, palladium, osmium, iridium and platinum. The addition of this catalyst in the mixture of step (I) results in the formation of a mixture or reaction product.

The catalyst is preferably a platinum containing catalyst component since they are the most widely used and available. They also provide a more favorable result for the method of this invention in terms of improved pot life and/or cure time. Platinum-containing catalysts can be platinum metal, optionally deposited on a carrier, such as silica gel or powdered charcoal or a compound or complex of a platinum group metal. A preferred platinum-containing catalyst is a form of chloroplatinic acid, either as the commonly available hexahydrate form or as the anhydrous form, as taught by U.S. Patent No. 2,823,218. A particularly useful form of chloroplatinic acid is obtained when it is reacted with an aliphatically unsaturated organosilicon compound such as divinyltetramethyldisiloxane, as disclosed by U.S. Patent No. 3,419,593, because of its easy dispersibility in organo-silicon systems. Other platinum catalysts which are thought to be useful in this invention are disclosed in U.S. Patent Nos. 3,159,601; 3,159,602; 3,220,972; 3,296,291; 3,516,946; 3,814,730 and 3,928,629. The amount of platinum catalyst that is used in this invention is not narrowly limited as long as there is a sufficient amount to accelerate a room temperature reaction between the silicon-bonded hydrogen atoms of the silane with the vinyl ether compound. The exact amount of catalyst will depend on the particular catalyst utilized and is not easily predictable. However, for platinum containing catalysts the amount can be as low as one part by weight of platinum for every one million parts by weight of the total composition. Preferably, the amount is at least 10 parts by weight, on the same basis.

Step (II) in the method of this invention comprises adding a polydiorganosiloxane to the reaction product of (I). The polydiorganosiloxane preferably is a compound having the formula HOSiR⁴₂O(R⁴₂SiO)ₙRSi⁴₂OH wherein R⁴ is selected from a monovalent hydrocarbon or haloydrocarbon radical having from 1 to 8 carbon atoms and hydrogen atom and n has a value from 1 to 300. The monovalent hydrocarbon radicals suitable as R⁴ are as delineated above for R in Step (I).

In a preferred embodiment of the present invention, the polydiorganosiloxane of Step (II) is a hydroxyl-endblocked polydimethylsiloxane having the formula HOMe₂SiO(Me₂SiO)ₙSiMe₂OH wherein n has a value of from 10 to 60.

The polyorganosiloxanes of Step (II) are well known in the silicone art and need no detailed delineation herein. Suitable hydroxyl-endblocked polydiorganosiloxanes are disclosed in U.S. Patent Nos. 2,807,601,; 2,985,545; 3,900,617; 4,190,688; 4,293,671; 4,476,241; 4,559,396; 4,562,096; 4,587,136 and 4,609,574. It is preferable that 10 to 80 weight percent of hydoxyl-endblocked polydiorganosiloxane in step (II) be used, and it is highly preferred that 25 to 50 weight percent of hydroxyl-endblocked polydiorganosiloxane be used, said weight percent being based on the total weight of the composition.

Step (III) of the present invention comprises adding a condensation catalyst to the mixture of Step (II). The condensation catalysts are any of the compounds which are known to facilitate the reactions between SiOH groups and SiH groups. Examples of condensation catalysts include dimethyltin neodecanoate, dibutyltin diacetate, dibutyltin dilaurate, dioctyltin dilaurate, dibutyltin dioctoate, zinc napthenate, cobalt napthenate, zinc octylate, tin octylate, cobalt octylate, diisooctyl mercaptoacetate, zirconium napthenate, zirconium octylate, tetrabutyl orthotitanate, stannous octoate and other organic metal catalysts. It is preferred that this catalyst is selected from tetrabutyl orthotitanate, stannous octoate and dibutyltin dilaurate. The amount of condensation catalyst needed is determined by the skilled artisan through routine experimentation. Typically, this component is employed at a level of 0.1 to 10 weight percent and preferably 0.5 to 5 weight percent, said weight percent being based on the total weight of the composition.

The method of this invention can further comprise heating the mixture after step (I). By heat, it is meant infrared radiation, hot-air and microwave radiation. It is preferred that the mixture resulting from Step (I) be heated from room temperature to 150°C. or less, and it is highly preferred that the mixture be heated at a temperature of from 50 to 70°C.

The method of our invention can further comprise stripping off excess organic vinyl ether and alcohol after step (I). Methods of stripping volatile components are known in the art and need no extensive delineation herein. Any method of removing volatile components can be used and such methods are exemplified by molecular stills, rotoevaporators and wipe film evaporators, with the preferred method being wipe film evaporators.

The invention further relates to a method of making a curable coating composition comprising (I) mixing (A) a silane having the formula (RO)ₓSiR¹₄₋ₓ, (B) a vinyl ether compound selected from (i) H₂C=CHOR²OCH=CH₂, (ii) (H₂C=CHOR²)_{y}CR³_{4-y} and (iii) a mixture thereof, and (C) a hydrosilylation catalyst, wherein R is a monovalent hydrocarbon or halohydrocarbon radical having from 1 to 8 carbon atoms, R¹ is hydrogen atom or R, R² is a divalent hydrocarbon or halohydrocarbon radical having from 1 to 20 carbon atoms, R³ is a monovalent hydrocarbon or halohydrocarbon radical having from 1 to 20 carbon atoms or hydrogen atom, x has a value from 1 to 3, y has a value of 3 or 4 and the silane contains at least one silicon bonded hydrogen atom in its molecule; wherein the molar ratio of vinyloxy containing molecules to silicon bonded hydrogen atoms is greater than 1.0, to form a reaction product; (II) adding a polydiorganosiloxane having the formula HOSiR⁴₂(R⁴₂SiO)ₙOSiR⁴₂OH wherein R⁴ is selected from R and R¹, to the reaction product of (I); (III) adding a condensation catalyst to the mixture of (II); (IV) adding a photocleavable acid to the mixture of (III); (V) applying the mixture from (IV) to a solid substrate to form a coating; (VI) exposing the coating to an energy source selected from (a) actinic radiation and (b) actinic radiation in combination with heat in an amount sufficient to cure the coating. In this method, the silane, vinyl ether compound and hydrosilylation catalyst of Step (I) are as delineated above for making the vinyl ether functional siloxane of this invention, including amounts and preferred examples thereof. The polydiorganosiloxane of Step (II) and the condensation catalyst of step (III) are also as delineated above, including amounts and preferred examples thereof.

Step (IV) comprises adding a photocleavable acid to the mixture of step (III). Suitable photocleavable acids are onium salts and certain nitrobenzyl sulfonate esters. Preferred are onium salts having the formulae R₂I⁺MXₙ⁻, R₃S⁺MXₙ⁻, R₃Se⁺MXₙ⁻, R₄P⁺MXₙ⁻ and R₄N⁺MXₙ⁻, wherein R is the same or different organic radicals having from 1 to 30 carbon atoms, including aromatic carbocyclic radicals of from 6 to 20 carbon atoms which can be substituted with 1 to 4 monovalent hydrocarbon radicals selected from alkoxy radicals having from 1 to 8 carbon atoms, alkyl radicals having from 1 to 8 carbon atoms, nitro, chloro, bromo, cyano, carboxy, mercapto and aromatic heterocyclic radicals including pyridyl, thiophenyl and pyranyl. The symbol M is for metals or metalloids which include transition metals such as Sb, Fe, Sn, Bi, Al, Ga, In, Ti, Zr, Sc, V, Cr, Mn and Cs; rare earth metals such as the lanthanides Cd, Pr and Nd; and metalloids such as B, P and As. MXₙ⁻ is a non-basic, non-nucleophilic anion, such as BF₄-, PF₆-, AsF₆-, SbF₆ -, SbCl₆- HSO₄-, ClO₄-, FeCl₄=, SnCl₆- and BiCl₅=.

Bis-diaryl iodonium salts, such as bis(dodecylphenyl) iodonium hexafluoroarsenate and bis(dodecylphenyl) iodonium hexafluoroantimonate and dialkylphenyl iodonium hexafluoroantimonate are preferred.

Nitrobenzyl sulfonate esters useful as photo-cleavable acids in this present invention have the general formula 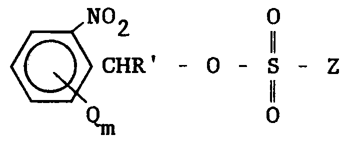
wherein Z is selected from alkyl groups, aryl groups, alkylaryl groups, halogen substituted alkyl groups, halogen substituted aryl groups, halogen substituted alkylaryl groups, nitro substituted aryl groups, nitro substituted alkylaryl groups, aryl groups having nitro and halogen substituents, alkylaryl groups having nitro and halogen substituents and a group having the formula C₆H₄SO₃CHR'C₆H₄₋ₘQₘ(NO)₂. R' is selected from hydrogen atom, methyl and nitro substituted aryl groups, each Q is independently selected from hydrocarbon groups, hydrocarbonoxy groups, NO₂, halogen atoms, organosilicon compounds and m has a value of 0, 1 or 2, with the proviso that Q is not an acidic group. These nitrobenzyl sulfonate photocleavable acids are described in U.K. Application No. 91 24 422.8 filed November 14, 1991. A preferred nitrobenzyl derivative for the present invention is where m has a value of 1, Q denotes a NO₂ group in the ortho position in relation to the -CHR'OS(O)₂Z group and Z denotes a nitrophenyl group, wherein the nitro group is in the para position relative to the sulphonic group or Z denotes a phenylmethyl group or a trifluoropropylmethylphenyl group.

The photocleavable acids may be present in any proportions which produce curing in the method of this invention. Preferably, the amount of photocleavable acid is from 0.1 to 10 percent by weight based on the total weight of the composition and it is highly preferred to use between 1 and 5 percent by weight based on the total weight of the composition.

Step (V) of this invention comprises applying the mixture from step (IV) to a solid substrate to form a coating. In a preferred embodiment, the solid substrate is a flexible sheet material such as paper, polyolefin film and polyolefin-coated paper or foil. Other solid substrates that can be coated by our invention include other cellulosic materials such as wood, cardboard and cotton; metallic materials such as aluminum, copper, steel and silver; siliceous materials such as glass and stone; and synthetic polymer materials such as polyolefins, polyamides, polyesters and polyacrylates. The solid substrate can be substantially sheet-like, such as a peelable release liner for pressure sensitive adhesive; a fabric or a foil; or substantially three-dimensional in form.

Step (VI) comprises exposing the coating to an energy source selected from (i) actinic radiation and (ii) actinic radiation in combination with heat in an amount sufficient to cure the coating. By actinic radiation, it is meant ultraviolet light; electron beam radiation; and alpha-, beta-, gamma- and x-rays. By heat, it is meant infrared radiation, hot-air and microwave radiation. Of course, actinic radiation is frequently accompanied by heat and the use of a combination of the two falls within the scope and spirit of the present invention.

Herein the term "cure" generally denotes a chemical change which leads to the composition going from a liquid to a solid. Curing may be achieved in any of the known ways, including passing a coated substrate under a source of radiation, for example, a UV lamp, at a predetermined rate and by exposing a completely coated substrate to radiation by exposure to the required energy source for a predetermined time.

The present invention can further comprise heating the mixture after step (I). By heat, it is meant infrared radiation, hot-air and microwave radiation. It is preferred that the mixture resulting from Step (I) be heated from room temperature to 150°C. or less and it is highly preferred that the mixture be heated from 50 to 70°C.

The method of our invention can further comprise stripping off excess organic vinyl ether and alcohol after step (I). Methods of stripping volatile components are known in the art and need no extensive delineation herein. Any method can be used and are exemplified by molecular stills, rotoevaporators and wipe film evaporators, with the preferred method being wipe film evaporators.

In another preferred embodiment, a flexible sheet material, such as paper, metal foil or tapestock, is coated with a thin coating of the liquid curable composition, preferably in a continuous manner and the thus-coated material is then heated and/or irradiated to rapidly cure the coating, to provide a sheet like material bearing on at least one surface thereof an adhesive-releasing coating. The adhesive-releasing coating is subsequently brought into contact with a pressure sensitive adhesive, preferably in an in-line manner, to form an article having a peelable, i.e. releasable, adhesive/coating interface. Examples of such an article include, adhesive labels having a peelable backing, adhesive tape in roll form and an adhesive packaged in a strippable container. The pressure sensitive adhesive can be non-silicone-based, such as the well-known acrylic or rubber types or it can be silicone-based, such as the peroxide- or platinum-curable polydiorganosiloxane-based adhesives.

The present invention further relates to a vinyl ether functional organopolysiloxane compound having the general formula: 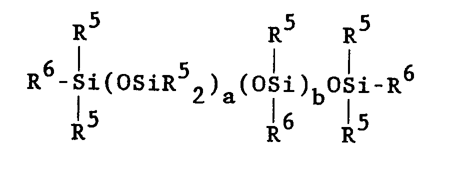
wherein R⁵ is a monovalent hydrocarbon or halohydrocarbon radical having from 1 to 20 carbon atoms or an alkoxy radical having from 1 to 8 carbon atoms, R⁶ is R⁵ or a hydrocarbon or halohydrocarbon radical containing at least one vinyl ether group, a has a value from 0 to 1000 and b has a value from 0 to 200, with the proviso that at least one vinyl ether radical is present in the molecule. The monovalent hydrocarbon radicals of R⁵ include monovalent hydrocarbon or halohydrocarbon radicals as delineated above, including preferred examples. R⁵ can also be an alkoxy radical having from 1 to 8 carbon atoms such as a methoxy, ethoxy, propoxy or butoxy radical. It is highly preferred that R⁵ is methyl or methoxy.

It is also preferred that R⁶ is a vinyl ether group having a formula selected from (i) -CH₂CH₂OR⁷OCH=CH₂ or (ii) (H₂C=CHOR⁷)_{z}CR⁸_{4-z} wherein R⁷ is a divalent hydrocarbon or halohydrocarbon radical having from 1 to 20 carbon atoms, R⁸ is a monovalent hydrocarbon or halohydrocarbon radical having from 1 to 20 carbon atoms or hydrogen and z has a value of 1 or 2. Divalent hydrocarbon radicals suitable as R⁷ are exemplified by alkylene radicals, such as methylene, ethylene, trimethylene, 2-methyltrimethylene, pentamethylene, hexamethylene, 3-ethyl-hexamethylene, octamethylene, -CH₂(CH₃)CH-, -(CH2)₄-, - CH₂CH(CH₃)CH₂- and -(CH₂)₁₈-; cycloalkylene radicals such as cyclohexylene; arylene radicals such as phenylene and combinations of divalent hydrocarbon radicals such as benzylene, i.e., -C₆H₄CH₂-.

Examples of suitable divalent halohydrocarbon radicals as R⁷ include any divalent hydrocarbon radical wherein one or more hydrogen atoms have been replaced by halogen, such as fluorine, chlorine or bromine. Preferably divalent halohydrocarbon radicals have the formula -CH₂CH₂CₙF₂ₙCH₂CH₂- wherein n has a value of from 1to10 such as for example -CH₂CH₂CF₂CF₂CH₂CH₂-. Preferably R⁷ in formula (i) is an alkylene radical having from 6 to 8 carbon atoms, and it is highly preferred that R⁷ is selected from hexylene and cyclohexyldimethylene. Preferably, R⁷ in formula (ii) is methylene. The monovalent hydrocarbon radicals and alkoxy radicals in R⁸ in formula (ii) include those monovalent hydrocarbon or halohydrocarbon radicals and alkoxy radicals delineated above, including preferred examples. It is highly preferred that R⁸ be methyl or methoxy.

It is preferred that a have an average value of from 15 to 90 and b have an average value from 0.5 to 20. It is especially preferred that a have an average value between 70 and 90 and b have an average value between 5 and 15.

The present invention is further directed to a curable coating composition comprising (A) a vinyl ether functional polysiloxane compound and (B) a photocleavable acid. The vinyl ether functional polysiloxane compound is delineated above, including preferred embodiments thereof. It is preferred that from 95 to 99.5 weight percent of vinyl ether functional polysiloxane be used in the curable coating compositions of the invention, and it is highly preferred that from 97 to 99.5 weight percent be employed, said weight percent being based on the total weight of the composition. The photocleavable acid is also delineated above, including amounts and preferred embodiments thereof.

The curable coating composition of the present invention can further comprise (C), a reactive diluent. It is preferable for this invention that the reactive diluent is an organic vinyl ether compound having the formula (CH=CHOR⁹)_{d}CR¹⁰_{4-d} wherein R⁹ is a divalent hydrocarbon or halohydrocarbon radical having from 1 to 20 carbon atoms, R¹⁰ is a monovalent hydrocarbon or halohydrocarbon radical having from 1 to 20 carbon atoms or hydrogen atom and d has a value of 1 to 3. The divalent hydrocarbon and halohydrocarbon radicals are delineated above, including preferred embodiments thereof. The monovalent hydrocarbon radicals are as delineated above, including preferred embodiments thereof.

For the present invention, the amount of reactive diluent is from 0.1 to 10 percent by weight based on the total weight of the composition. It is highly preferred to use this diluent between 1 and 5 percent by weight based on the total weight of the composition.

The methods and compositions of this invention are also applicable to adhesive materials other than pressure sensitive adhesives. Examples include foods, asphalt and gum polymers. The compositions of the present invention are useful as release coatings for pressure sensitive adhesives, as protective coatings and decorative coatings.

The compositions prepared in the methods and, the curable coating compositions of this invention, can contain any optional components such as photosensitizers, high release additives, reinforcing and extending fillers, hydrocarbons and halohydrocarbons free of aliphatic unsaturation, colorants, dyes, preservatives, fragrances, stabilizers, adhesion modifiers and adhesive-release modifiers. Preferably not more than 25% by weight of the total composition should be occupied by optional ingredients.

The methods of this invention can be completed by mixing the materials described and any optional components in the order delineated, using any suitable mixing means, such as a spatula, a drum roller, a mechanical stirrer, a three-roll mill, a sigma blade mixer, a bread dough mixer and a two-roll mill. The coating method can be accomplished by any suitable manner known in the art, such as by spreading, brushing, extruding, spraying, gravure, kiss-roll and air-knife.

The following examples are disclosed to further teach the invention which is properly delineated by the appended claims. All amounts (parts and percentages) are by weight unless otherwise indicated.

### EXAMPLE I

In a one ounce bottle, 1.61 g (grams) of (CH₃CH₂O)₃SiH, 3.90 g of a vinyl ether compound having the formula: 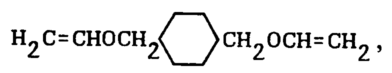
and 0.05 g of a platinum catalyst (a soluble platinum complex containing 0.67% platinum formed from chloroplatinic acid and divinyltetramethyldisiloxane) were admixed. This mixture was then heated for 2 hours at 22°C. and for 1.5 hours at 40°C. until the reaction was complete. The mixture was then -removed from the heat source and allowed to cool. After cooling, 4.35 g of a polydiorganosiloxane having the formula HOSiMe₂O(Me₂SiO)₁₀SiMe₂OH and 5 drops of dibutyltin dioctoate were added to the mixture. A yellowish straw colored product was obtained. This mixture was then heated for 10 minutes at 40°C. After cooling, 0.2 g of (C₁₂H₂₅Ph)₂I⁺SbF₆⁻, wherein Ph denotes phenyl, was added and to the resulting polymer, and this mixture was thoroughly stirred. Next, a thin film of the material, of 1 to 2 micrometers, was spread onto a Mylar™ type A film. The film was exposed at 6.1 m/min (20 ft/min.) to a single 11.8 Watt/mm (300W/inch) H bulb on a Fusion UV processor. The liquid coating cured to a tack-free film after exposure.

## Claims

1. A method of making a vinyl ether functional siloxane, the method comprising:
(I) mixing
(A) a silane having the formula (RO)ₓSiR¹₄₋ₓ;
(B) a vinyl ether compound selected from
(i) H₂C=CHOR²OCH=CH₂,
(ii) (H₂C=CHOR²)_{y}CR³_{4-y}, and
(iii) a mixture thereof; and
(C) a hydrosilylation catalyst wherein R is a monovalent hydrocarbon or halohydrocarbon radical having from 1 to 8 carbon atoms, R¹ is hydrogen atom or R, R² is a divalent hydrocarbon or halohydrocarbon radical having from 1 to 20 carbon atoms, R³ is a monovalent hydrocarbon or halohydrocarbon radical having from 1 to 20 carbon atoms or hydrogen, x has a value from 1 to 3, y has a value of 3 or 4, the silane contains at least one silicon bonded hydrogen radical in a molecule and wherein the molar ratio of CH₂=CHO- containing molecules to silicon bonded hydrogen molecules is greater than 1.0, to form a reaction product;
(II) adding a polydiorganosiloxane having the formula
HOSiR⁴₂O(R⁴₂SiO)ₙSiR⁴₂OH
to the reaction product of (I), wherein R⁴ is selected from monovalent hydrocarbon radicals having from 1 to 8 carbon atoms and hydrogen atom and n has a value of 1 to 300; and
(III) adding a condensation catalyst to the mixture of (II).

2. A method according to claim 1 further comprising heating the mixture after step (I).

3. A method according to claim 1 further comprising stripping off excess organic vinyl ether and alcohol after step (I).

4. A method according to claim 1 wherein R is an alkyl group having from 1 to 3 carbon atoms.

5. A method according to claim 1 wherein R and R⁴ are methyl.

6. A method according to claim 1 wherein R is methyl and R² in (b) is an alkylene radical having from 6 to 8 carbon atoms and R² in (c) is methylene.

7. A method according to claim 6 wherein R² in (b) is selected from hexylene and cyclohexyldimethylene.

8. A method according to claim 1 wherein R is methyl and R¹ is hydrogen atom.

9. A method according to claim 1 wherein the hydrosilylation catalyst is a platinum containing catalyst.

10. A method according to claim 9 wherein the platinum containing catalyst is a vinyl-siloxane complex of chloroplatinic acid.

11. A method according to claim 1 wherein R⁴ is methyl and n has a value of from 10 to 60.

12. A method according to claim 1 wherein the condensation catalyst is selected from tetrabutyl orthotitanate, stannous octoate and dibutyltin dilaurate.

13. A method of making a curable coating composition, the method comprising:
(I) preparing the vinyl ether functional siloxane of claim 1,
(II) adding a photocleavable acid;
(III) applying the mixture from (II) to a solid substrate to form a coating thereon; and
(IV) exposing the coating to an energy source selected from the group consisting of (i) actinic radiation and (ii) actinic radiation in combination with heat in an amount sufficient to cure the coating.

14. A method according to claim 13 further comprising releasably adhering a pressure sensitive adhesive composition to the cured applied coating.

15. A method according to claim 13, wherein the photocleavable acid is an onium salt having its formula selected from R₂I⁺MXₙ⁻, R₃S⁺MXₙ⁻, R₃Se⁺MXₙ⁻, R₄P⁺MXₙ⁻ and R₄N⁺MXₙ⁻, wherein each R is, independently, an organic radical having from 1 to 30 carbon atoms and MXₙ- is a non-basic, non-nucleophilic anion.

16. A method according to claim 15 wherein the non-basic, non-nucleophilic anion is selected from BF₄-, PF₆-, AsF₆-, SbF₆-, SbCl₆-, HSO₄-, ClO₄-, FeCl₄=, SnCl₆- and BiCl₅=.

17. A method according to claim 15 wherein the onium salt is selected from bis(dodecylphenyl) iodonium hexafluoroarsenate, bis(dodecylphenyl) iodonium hexafluoroantimonate and dialkylphenyl iodonium hexafluoroantimonate.

18. A method according to claim 13, wherein the photocleavable acid is a nitrobenzyl sulfonate ester having the general formula 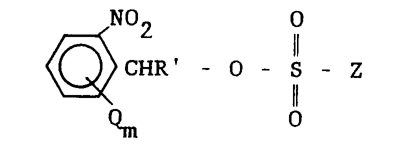 wherein Z is selected from alkyl groups, aryl groups, alkylaryl groups, halogen substituted alkyl groups, halogen substituted aryl groups, halogen substituted alkylaryl groups, nitro substituted aryl groups, nitro substituted alkylaryl groups, aryl groups having nitro and halogen substituents, alkylaryl groups having nitro and halogen substituents and a group having the formula C₆H₄SO₃CHR'C₆H₄₋ₘQₘ(NO)₂, R' is selected from hydrogen atom, methyl and nitro substituted aryl groups, each Q is independently selected from hydrocarbon groups, hydrocarbonoxy groups, NO₂, halogen atoms and organosilicon compounds, m has a value of 0, 1 or 2, with the proviso that Q is not an acidic group.

19. A compound having the general formula: 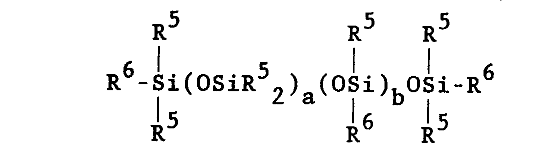 wherein R⁵ is selected from a monovalent hydrocarbon or halohydrocarbon radical having from 1 to 20 carbon atoms and an alkoxy radical having from 1 to 8 carbon atoms, R⁶ is R⁵ or a group having its formula selected from (i) -CH₂CH₂OR⁷OCH=CH₂ or (ii) (H₂C=CHOR⁷)_{z}CR⁸_{4-z} wherein R⁷ is a divalent hydrocarbon or halohydrocarbon radical having from 1 to 20 carbon atoms, R⁸ is a monovalent hydrocarbon or halohydrocarbon radical having from 1 to 20 carbon atoms or hydrogen and z has a value of 1 or 2, a has a value from 0 to 1000 and b has a value from 0 to 200, with the proviso that at least one group having its formula selected from (i) -CH₂CH₂OR⁷OCH=CH₂ and (ii) (H₂C=CHOR⁷)_{z}CR⁸_{4-z}- and at least one alkoxy radical is present in the compound.

20. A curable coating composition comprising:
(A) the compound of claim 19; and
(B) a photocleavable acid.

21. A composition according to claim 20 wherein the composition further comprises (C) a reactive diluent.

22. A composition according to claim 21 wherein the reactive diluent is an organic vinyl ether compound having the formula (CH=CHOR⁹)_{d}CR¹⁰_{4-d} wherein R⁹ is a divalent hydrocarbon or halohydrocarbon radical having from 1 to 20 carbon atoms, R¹⁰ is a monovalent hydrocarbon or halohydrocarbon radical having from 1 to 20 carbon atoms or hydrogen atom and d has a value of 1 to 3.
